# EUROPÄISCHE PATENTSCHRIFT

(11) **EP 4 128 646 B1**
(45) Veröffentlichungstag und Bekanntmachung des Hinweises auf die Patenterteilung: **18.10.2023**
(21) Anmeldenummer: 21728427.2
(22) Anmeldetag: 31.03.2021
(51) Int. Cl.: H04L 9/06, H04L 9/08

(54) **NUTZUNG QUANTENSICHERER SCHLÜSSEL MIT ENDGERÄTEEINRICHTUNGEN**
USE OF QUANTUM-SAFE KEYS WITH TERMINAL DEVICES
UTILISATION D'UNE CLÉ À SÉCURITÉ QUANTIQUE AVEC DES DISPOSITIFS DE TYPE TERMINAUX

(30) Priorität: 02.04.2020 DE 102020109246
(43) Veröffentlichungstag der Anmeldung: 08.02.2023
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Nern, Peter-Michael
(86) Internationale Anmeldenummer: PCT/DE2021/100317
(87) Internationale Veröffentlichungsnummer: WO 2021/197548

(56) Entgegenhaltungen:
- CN-A- 109 995 514
- US-A1- 2018 109 377

## Beschreibung

Die Erfindung betrifft eine Lösung zur Nutzung quantensicherer kryptographischer Schlüssel mit Endgeräteeinrichtungen für die telekommunikative Datenübertragung. Sie bezieht sich hierbei insbesondere auf ein entsprechendes Verfahren und auf eine zur Durchführung dieses Verfahrens ausgebildete Endgeräteeinrichtung.

In diesem Zusammenhang bezieht sich die Aussage, wonach die Erfindung eine Nutzung quantensicherer Schlüssel "mit" Endgeräteeinrichtungen betrifft, nicht ausschließlich auf die eigentliche Verwendung solcher quantensicherer Schlüssel durch eine jeweilige Endgeräteeinrichtung, sondern schließt im Hinblick darauf, dass die eigentliche Verwendung der Schlüssel deren Vorhandensein bei einer jeweiligen Endgeräteeinrichtung erfordert, den Bezug der quantensicheren Schlüssel durch die Endgeräteinrichtung ausdrücklich mit ein.

Die eigentliche Verwendung der quantensicheren Schlüssel umfasst zum einen deren Verwendung für die telekommunikative Übertragung verschlüsselter Daten jedweder Art, einschließlich weiterer Schlüssel, über räumliche Entfernungen hinweg, zum anderen aber auch die kryptographische Absicherung der für die Datenübertragung genutzten Netze, Verbindungen und Übertragungskanäle und in diesem Zusammenhang auch die Möglichkeit die Schlüssel anderen Geräten zu den vorgenannten Zwecken im Zusammenwirken mit der erfindungsgemäßen Endgeräteeinrichtung zur Verfügung zu stellen. Auch die Möglichkeit, die quantensicheren Schlüssel durch die Endgeräteeinrichtung wiederum an andere Geräte gewissermaßen weiterzureichen, welche zwar nicht dazu ausgebildet sind, diese nach dem erfindungsgemäßen Verfahren zu beziehen, sie aber ihrerseits für den späteren Einsatz bei der Verschlüsselung von Daten manipulationssicher zu speichern, soll im Kontext der nachfolgenden Darstellungen als Verwendung der Schlüssel angesehen werden. Insoweit dient die nachfolgend vorzustellende Endgeräteeinrichtung dazu, die von ihr bezogenen Schlüssel zur sicheren und verschlüsselten Übertragung von durch sie gegebenenfalls selbst oder durch andere Geräte genutzten (dann beim Versenden durch das betreffende Gerät zunächst noch unverschlüsselten und beim Empfangen durch dieses Gerät schon entschlüsselten) Daten bereitzustellen oder aber auch die Schlüssel als solches anderen Geräten zur späteren weiteren Verwendung für die verschlüsselte Datenübertragung oder für andere Applikation zur Verfügung zu stellen.

Der Sicherheit zwischen Teilnehmern telekommunikativ übertragener Daten kommt eine sehr große, künftig noch steigende Bedeutung zu. Dies gilt für die Sicherheit der Daten selbst, im Hinblick auf die Verhinderung nicht autorisierter Zugriffe auf die Daten sowie auf die Sicherstellung ihrer Authentizität und der ihres Absenders, aber auch für die Absicherung der telekommunikativen Infrastruktur.

Im Zusammenhang mit der telekommunikativen Übertragung, also insbesondere der Fernübertragung von Daten ist es seit längerem bekannt und gebräuchlich, die Daten zu verschlüsseln, um unerlaubte Zugriffe auf die mit ihnen transportierten Informationen sowie Manipulationen der Daten zu verhindern. Gegenwärtig dazu überwiegend eingesetzte Verschlüsselungstechniken setzen auf Mechanismen, die darauf angelegt sind, das Brechen der verwendeten kryptographischen Schlüssel dadurch zu verhindern, dass insbesondere an die dafür erforderliche Hardware Anforderungen gestellt werden, die typischerweise von keinem oder kaum einem Angreifer erfüllt werden können.

Als eine sichere Möglichkeit hat sich dabei die Verwendung symmetrischer Schlüssel - für die Verschlüsselung der Daten und deren spätere Entschlüsselung wird derselbe Schlüssel verwendet - erwiesen, nämlich insbesondere dann, wenn ein jeweiliger symmetrischer Schlüssel jeweils nur für einen Datenübertragungsvorgang verwendet wird. Allerdings ist es vergleichsweise schwierig, einen symmetrischen Schlüssel auf sicherem Wege sowohl einem Daten sendenden Teilnehmer als auch einem zu dessen Empfang berechtigten Teilnehmer zur Verfügung zu stellen. Gegen eine mehrmalige Verwendung der Schlüssel spricht andererseits perspektivisch unter anderem die sich gegenwärtig stark beschleunigende Entwicklung von Quantencomputern. Derartige Computer könnten bei ihrem Einsatz durch Angreifer (Hacker) die zuvor erläuterte Annahme gebräuchlicher Verschlüsselungstechniken insoweit außer Kraft setzen, als diese eine Leistungsfähigkeit hätten, welche die herkömmlicher Computertechnik um ein Vielfaches übersteigt. Benötigen beispielsweise herkömmliche, das heißt nicht quantenbasierte Computer auch mit leistungsfähigster Hardware und gegebenenfalls sogar im Verbund theoretisch viele Jahre, um einen Schlüssel zu brechen, so könnte dieses künftig mittels Quantencomputern in nur wenigen Minuten gelingen.

Die Möglichkeiten, welche die Quantenphysik und die auf ihr basierenden Computer bieten, können aber andererseits auch für die Bereitstellung sicherer Schlüssel und insbesondere für deren Austausch genutzt werden. Hierzu wurden beispielsweise Verfahren entwickelt, welche unter dem Oberbegriff QKD-Verfahren (QKD = Quantum Key Distribution) zusammengefasst werden. Ein solches QKD-Verfahren wird beispielsweise durch die Erzeugung und der Austausch quantensicherer Schlüssel nach dem als BB84 bezeichneten Protokoll realisiert. Derartige, auf der Nutzung quantenmechanischer Effekte basierende Verfahren, wie das Verfahren nach dem BB84-Protokoll, ermöglichen die sichere Übertragung von Daten sowie die Sicherung der dafür verwendeten Übertragungswege dadurch, dass mittels ihrer erzeugte und verteilte Schlüssel gleichzeitig an beiden Enden einer gesicherten Verbindung vorliegen und es darüber hinaus nicht möglich ist, einen Angriff auf den die Schlüssel erzeugenden Quantenübertragungskanal auszuführen, welcher unbemerkt bliebe. Insbesondere Letzteres, also dass es nicht möglich ist, einen quantengesicherten Übertragungskanal anzugreifen, ohne dass dies durch die berechtigten Teilnehmer an den beiderseitigen Kanalenden bemerkt würde, garantiert dabei eine gesicherte Übertragung von Daten auch für den Fall, dass ein Angriff auf den Übertragungskanal unter Verwendung von Quantencomputern erfolgt.

Allerdings ist die technische Realisierung einer QKD-Verbindung sehr aufwendig und teuer. Dadurch kommt deren Einsatz jedenfalls mittelfristig im Grunde nur im Bereich von Kernnetzen der telekommunikativen Infrastruktur, in anderen speziellen Netzwerken oder im Zusammenhang mit besonders sicherheitsrelevanten Anwendungen, wie etwa bei Verbindungen zu oder zwischen Banken, Data-Centern oder Ministerien, in Betracht. Auch Endgeräteeinrichtungen für den Einsatz von QKD-Verfahren zu ertüchtigen, erscheint dagegen - Stand jetzt - eher ausgeschlossen, zumindest im Hinblick auf eine breite Anwendung. Andererseits ist auch für eine Vielzahl bereits genutzter oder sich in Entwicklung befindender Anwendungen - zu denken ist hierbei zum Beispiel an den Ausbau des Internet of Things (IoT) - eine sichere Übertragung von Daten über gesicherte Datenkanäle im Grunde essentiell.

In der CN 109 995 514 A werden ein System und ein Verfahren zur Bereitstellung eines quantensicheren Schlüssels als Sitzungsschlüssel für die Übertragung von Daten zwischen einem ersten mobilen Endgerät und einem zweiten mobilen Endgerät beschrieben. Demnach wird an jedes Endgerät durch einen mit ihm assoziierten Quanten-Service-Knoten (QKD-Knoten) eine Liste mit einer Anzahl quantensicherer Schlüssel und derselben Anzahl jeweils einen dieser Schlüssel eindeutig identifizierender Identifikatoren übertragen. Sofern eines der Endgeräte bei dem System einen Sitzungsschlüssel für einen Datenaustausch mit dem anderen anfordert, wird gesteuert durch ein Netzwerkmanagement, von einem der QKD-Knoten ein Schlüssel aus der Liste des mit ihm assoziierten Endgerätes ausgewählt und letzterem der Identifikator dieses Schlüssels mitgeteilt. Der ausgewählte Schlüssel wird als bitweise XOR-Verknüpfung mit einem Schlüssel aus der Liste des anderen Endgeräts an dieses andere Endgerät zusammen mit dem Identifikator des aus seiner Liste verwendeten Schlüssels übermittelt. Die empfangene XOR-Verknüpfung wird durch das empfangende Endgerät abermals mit dem ihm aufgrund des mit übermittelten Identifikators bekannten Schlüssel bitweise XOR-verknüpft, so dass auch bei ihm der dem anderen Endgerät aufgrund des ihm übermittelten Identifikators ohnehin bekannte Schlüssel zur Verwendung als Sitzungsschlüssel für den Datenaustausch mit dem anderen Endgerät vorliegt. Nachteilig hierbei ist, dass die an ein Endgerät zur späteren Verwendung für die Verabredung von Sitzungsschlüsseln übertragene Schlüsselliste mit Identifikatoren durch einen Angreifer abgefangen werden könnte.

Die US 2018/0109377 A1 beschreibt eine Lösung, bei der ein Server von einem sich dazu gegenüber dem Server authentifizierenden Client eine Schlüsselverhandlungsanforderung empfängt. Der Client seinerseits authentifiziert den Server auf der Grundlage einer Schlüsselverhandlungsantwort. Nachdem Client und Server einander erfolgreich authentifiziert haben, handeln sie unter Nutzung eines QKD-Prozesses geheime Schlüssel aus, die sie untereinander teilen. Entsprechend in der Schrift beschriebener Ausbildungsformen speichern der Server und der Client die geheimen Schlüssel jeweils in einem Hardwaresicherheitsmodul (HSM) eines VPN, wobei sie bei deren späterer Nutzung über eine zwischen den VPNs bestehende klassische Verbindung untereinander verschlüsselt Daten austauschen.

Aufgabe der Erfindung ist es daher, eine sichere Lösung bereitzustellen, welche die Nutzung quantensicherer kryptographischer Schlüssel auch mit Endgeräteeinrichtungen ermöglicht. Hierzu sollen ein Verfahren angegeben und eine zu dessen Ausführung ausgebildete Endgeräteeinrichtung bereitgestellt werden.

Die Aufgabe wird durch ein Verfahren mit den Merkmalen des Patentanspruchs 1 gelöst. Eine die Aufgabe lösende, zur Durchführung des Verfahrens geeignete Endgeräteeinrichtung wird durch den ersten Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren zur Nutzung quantensicherer kryptographischer Schlüssel mit Endgeräteeinrichtungen geht davon aus, dass entsprechende Schlüssel von einer Endgeräteeinrichtung - beispielsweise für die Ver- und Entschlüsselung symmetrischer Nutzdaten - verwendet werden können, welche zwar zur Durchführung des nachfolgend dargestellten Verfahrens ausgebildet sein muss, ohne dabei aber selbst über quantentechnische Mittel zur Erzeugung quantensicherer Schlüssel zu verfügen.

Gemäß dem Verfahren werden die von einer solchen Endgeräteeinrichtung verwendeten quantensicheren Schlüssel von der betreffenden Endgeräteeinrichtung zuvor, also vor ihrer eigentlichen Verwendung, durch Anforderung von einem QKD-Verbund bezogen, der durch einen ersten Netzwerkknoten und einen mit diesem ersten Netzwerkknoten über einen quantensicheren Übertragungskanal in einer Quantum Key Distribution Verbindung stehenden zweiten Netzwerkknoten gebildet wird. Durch einen solchen, beispielsweise in einem Kernnetz eines Netzproviders oder in einem speziellen Firmennetzwerk betriebenen QKD-Verbund mit zwei Netzwerkknoten werden fortwährend quantensichere Zufallszahlen gleicher Bit-Länge erzeugt und in entsprechenden Einrichtungen beider Netzwerkknoten gespeichert. Aufgrund eines dabei zur Anwendung kommenden QKD-Protokolls (beispielsweise BB84) liegen die vorgenannten, durch den QKD-Verbund erzeugten Zufallszahlen jeweils identisch bei beiden Netzwerkknoten dieses QKD-Verbundes vor. Der Begriff QKD-Verbund wird zur sprachlichen Vereinfachung im Kontext der Erfindung und der Patentansprüche verwendet für eine Anordnung aus zwei Netzwerkknoten und einer zwischen diesen bestehenden QKD-Verbindung, das heißt einer einen Quantenkanal umfassenden Verbindung.

Der sich auf Anforderung durch eine jeweilige Endgeräteeinrichtung vollziehende Bezug der quantensicheren Schlüssel erfolgt, indem aufgrund dieser Anforderung von den Netzwerkknoten des QKD-Verbundes auf wenigstens zwei zueinander disjunkten Wegen mehrere voneinander verschiedene, aus von dem QKD-Verbund erzeugten Zufallszahlen durch bitweise Verknüpfung gebildete XOR-Verknüpfungen über VPN-Verbindungen an die Endgeräteeinrichtung übertragen werden. Aus diesen XOR-Verknüpfungen extrahiert die zur Durchführung des Verfahrens ausgebildete Endgeräteeinrichtung einen auch bei den Netzwerkknoten des QKD-Verbundes vorliegenden quantensicheren Bezugsschlüssel. Dieser Bezugsschlüssel wird dann zur symmetrischen Verschlüsselung in einem nachfolgenden Übertragungsvorgang von einem der Netzwerkknoten des QKD-Verbundes an die Endgeräteeinrichtung übertragener Daten verwendet. Die mit dem Bezugsschlüssel verschlüsselten Daten umfassen eine größere Anzahl von dem QKD-Verbund erzeugter Zufallszahlen, aus denen die sie empfangende Endgeräteeinrichtung mehrere, wiederum ebenfalls in beiden Netzwerkknoten des QKD-Verbundes vorliegende kryptographische Schlüssel extrahiert und zur späteren Verwendung manipulationssicher in einem Speicher der Endgeräteeinrichtung ablegt.

Entsprechend einer möglichen Ausgestaltung des erfindungsgemäßen Verfahrens vollzieht sich im Falle einer durch die Endgeräteeinrichtung erfolgenden Anforderung quantensicherer Schlüssel bei einem der Netzwerkknoten des QKD-Verbundes folgender Ablauf:
1. In den beiden Netzwerkknoten des QKD-Verbundes werden aus von dem QKD-Verbund bereits erzeugten Zufallszahlen durch bitweise Verknüpfung mindestens vier voneinander verschiedene XOR-Verknüpfungen gebildet, wobei eine dieser Zufallszahlen (bestimmt durch ein in den Netzwerkknoten des QKD-Verbundes hinterlegtes Regelwerk) eine hier als Schlüsseldatencontainer bezeichnete Bit-Folge darstellt. Zur Bedeutung dieser Bezeichnung beziehungsweise zu den Eigenschaften dieses Schlüsseldatencontainers sollen später einige Ausführungen erfolgen.
2. Ein Teil der gemäß 1. gebildeten mindestens vier XOR-Verknüpfungen wird von einem der Netzwerkknoten des QKD-Verbundes über einen ersten Übertragungsweg an die Schlüssel anfordernde Endgeräteeinrichtung übertragen, wobei gleichzeitig die übrigen der aus den Zufallszahlen gebildeten mindestens vier XOR-Verknüpfungen von dem anderen Netzwerkknoten des QKD-Verbundes über einen gegenüber dem ersten Übertragungsweg vollständig disjunkten zweiten Übertragungsweg an die dafür ausgebildete Endgeräteeinrichtung übertragen werden. Außerdem wird zusammen mit jeder der vorgenannten XOR-Verknüpfungen ein in allen Fällen aus derselben Zufallszahl gebildeter identischer Hashwert an die betreffende Endgeräteeinrichtung übertragen. Vorzugsweise, aber nicht zwingend, handelt es sich bei der vorgenannten, zur Bildung des Hashwertes verwendeten Zufallszahl um eine der auch zur Bildung der XOR-Verknüpfungen verwendeten Zufallszahlen. Dies ist ohne Beeinträchtigung der Zuverlässigkeit und Sicherheit des Verfahrens möglich und insoweit vorteilhaft, als die Bildung des Hashwertes dabei nicht zu Lasten der Erzeugungsrate für die quantensicheren Zufallszahlen geht.
3. In der die vorgenannten Verknüpfungen empfangenden Endgeräteeinrichtung werden alle XOR-Verknüpfungen, welche mit dem identischen Hashwert assoziiert sind, also mit dem identischen Hashwert zusammen übertragen wurden, ihrerseits bitweise miteinander XOR-verknüpft. Im Ergebnis dieser bitweisen XOR-Verknüpfung wird aufgrund der Art und Weise, wie die quantensicheren Zufallszahlen in dem vorhergehenden Schritt 1 miteinander XOR-verknüpft wurden/werden, die als Schlüsseldatencontainer dienende quantensichere Zufallszahl erhalten. Zudem wird durch die Art und Weise, wie die mit den Zufallszahlen gebildeten XOR-Verknüpfungen bei der Übertragung an die Endgeräteeinrichtung auf die beiden zueinander disjunkten Übertragungswege aufgeteilt wurden/werden, sowie durch zeitliche Differenz zwischen den einzelnen Übertragungen der XOR-Verknüpfungen sichergestellt, dass der Schlüsseldatencontainer (beispielsweise durch einen Angreifer) nicht aus den über nur einen der Übertragungswege übertragenen XOR-Verknüpfungen erschlossen werden kann.
4. Aus der als Schlüsseldatencontainer dienenden quantensicheren Zufallszahl werden dann in der Endgeräteeinrichtung eine als Bezugsschlüssel dienende Bit-Folge und eine als Identifikator für diesen Bezugsschlüssel dienende Bit-Folge extrahiert. Hieraus begründet sich auch die Bezeichnung dieser ausgewählten Zufallszahl als Schlüsseldatencontainer, da in der diese Zufallszahl abbildenden Bitfolge (gewissermaßen vereinbarungsgemäß) sowohl die Bits des Bezugsschlüssels als auch die Bits des mit diesem assoziierten Schlüsselidentifikators enthalten sind. Das Extrahieren des Bezugsschlüssels und des mit ihm assoziierten, ihn also eindeutig bezeichnenden Identifikators erfolgt durch Anwendung einer Vorschrift, welche dafür auch in den Netzwerkknoten angewendet wird oder komplementär zu einer in den Netzwerkknoten bei der Erzeugung des Schlüsseldatencontainers, durch Zusammenfügen mindestens des Bezugsschlüssels und seines Identifikators, angewendeten Vorschrift ist.
5. Zum Bezug einer größeren Zahl später von ihr zu verwendender kryptographischer Schlüssel wird dann durch die Endgeräteeinrichtung der mit dem gemäß Schritt 4 gebildeten Bezugsschlüssel assoziierte Identifikator an einen Netzwerkknoten des QKD-Verbundes übertragen. Dabei ist es ein wesentlicher Vorzug des erfindungsgemäßen Verfahrens, dass die Übertragung des mit dem Bezugsschlüssel assoziierten Identifikators über einen noch nicht mittels quantensicherer Schlüssel gesicherten Übertragungskanal völlig unschädlich ist, da der mit dem Identifikator assoziierte Bezugsschlüssel nur der Endgeräteeinrichtung und den beiden Netzwerkknoten des QKD-Verbundes bekannt ist.
6. Von dem den Identifikator empfangenden Netzwerkknoten des QKD-Verbundes werden dann, unter Verschlüsselung mit dem zu dem Identifikator gehörenden Bezugsschlüssel und damit gesichert, Daten mit einer größeren Anzahl der durch den QKD-Verbund erzeugten quantensicheren Zufallszahlen als quantensichere Schlüssel an die sie anfordernde Endgeräteeinrichtung übertragen.
7. Aus den unter Verschlüsselung mit dem Bezugsschlüssel übertragenen Daten mit den Zufallszahlen werden in der sie empfangenden Endgeräteeinrichtung eine entsprechende Anzahl kryptographischer Schlüssel und zu jedem dieser Schlüssel ein mit ihm assoziierter Identifikator extrahiert. Die so erhaltenen kryptographischen Schlüssel werden schließlich in einem manipulationssicheren Speicher der dafür ausgebildeten Endgeräteeinrichtung zur späteren Verwendung (zum Beispiel zur Verschlüsselung zu übertragender Nutzdaten) abgelegt. Das Extrahieren der kryptographischen Schlüssel und der mit ihnen assoziierten Identifikatoren aus den unter Verschlüsselung mit dem Bezugsschlüssel empfangenen Bitfolgen (Daten) erfolgt gemäß einer Vorschrift, welche dafür auch in den Netzwerkknoten angewendet wird oder welche komplementär ist zu einer in den
Netzwerkknoten bei der Erzeugung einer jeweiligen, einen Schlüssel und dessen Identifikator umfassenden, den mittels des Bezugsschlüssels zu versendenden Daten hinzugefügten Bitfolge angewendeten Vorschrift.

Soweit vorstehend und in den Patentansprüchen ausgeführt wird, dass die zur Extraktion des Bezugsschlüssels und des mit ihm assoziierten Identifikators sowie die zur Extraktion von kryptographischen Schlüsseln und der mit ihnen jeweils assoziierten Identifikatoren angewendete Vorschrift jeweils auch für die Netzwerkknoten des QKD-Verbundes gilt oder welche komplementär zu einer beim Zusammenfügen einer aus einem Schlüssel und einem Identifikator bestehenden Bitfolge verwendeten Vorschrift ist, sei hierzu Folgendes angemerkt. Zunächst ist es sicherlich selbstverständlich, dass die Extraktion eines jeweiligen Schlüssels (Bezugsschlüssel oder kryptographischer Schlüssel zur späteren Verwendung, wie zum Beispiel zur Verschlüsselung von Nutzdaten) und eines zugehörigen Identifikators aus einer quantensicheren Zufallszahl nicht in willkürlicher Weise, sondern nach einer eindeutigen Vorschrift erfolgt.

Ziel ist es dabei, dass ein jeweiliger Schlüssel und der mit ihm assoziierte Identifikator identisch sowohl in der Endgeräteeinrichtung als auch in den beiden Netzwerkknoten des QKD-Verbundes vorliegen. Dies heißt allerdings nicht zwingend, dass ein jeweiliger Schlüssel und der mit ihm assoziierte Identifikator in den Netzwerkknoten des QKD-Verbundes ebenfalls erst durch eine entsprechende Extraktion gewonnen werden müssen. Vielmehr können der jeweilige Schlüssel und der mit ihm assoziierte Identifikator in den Netzwerkknoten des QKD-Verbundes auch bereits in separierter Form vorliegen (dabei handelt es sich sowohl bei dem Schlüssel als auch bei dessen Identifikator jeweils um eine Zufallszahl) und für die Übertragung in definierter Weise zu einer Bitfolge und damit zu einer einzigen Zufallszahl zusammengefasst werden, aus welcher dann in der diese Zufallszahl empfangenden Endgeräteeinrichtung in Umkehrung des Vorgangs der Zusammenfügung von Schlüssel und zugehörigem Identifikator deren Separierung erfolgt.

Demnach ist es sowohl denkbar, dass ein jeweiliger Schlüssel und der zu ihm gehörende Identifikator in den Netzwerkknoten des QKD-Verbundes von vornherein eine entsprechend lange gemeinsame Zufallszahl ausbilden und hier nach derselben, auch in der Endgeräteeinrichtung angewendeten Vorschrift aus dieser Zufallszahl extrahiert werden oder aber, dass der Schlüssel einerseits und der zugehörige Identifikator andererseits in den Netzwerkendeinrichtungen des QKD-Verbundes von vornherein in separierter Form vorliegen. In der Endgeräteeinrichtung erfolgt dabei aber in jedem Falle eine Extraktion von Schlüssel und Identifikator entsprechend einer korrespondierenden Vorschrift, die sicherstellt, dass in den Netzwerkknoten des QKD-Verbundes einerseits und in der Endgeräteeinrichtung andererseits jeweils dieselben Schlüssel und zugehörigen Identifikatoren vorliegen. Letzteres, also die Separierung von Schlüssel und zugehörigem Identifikator in der Endgeräteeinrichtung, ist dabei insoweit gemäß der bevorzugten (grundsätzlichen) Verfahrensgestaltung erforderlich, als ein jeweiliger Schlüssel und der zugehörige Identifikator für die Übertragung zu der Endgeräteeinrichtung zu einer gemeinsamen Zufallszahl zusammengefasst sind, welche für die Übertragung an die Endgeräteeinrichtung ihrerseits mit einer oder mehreren in gleicher Weise entstandenen Zufallszahlen XOR-verknüpft wird.

Wie eingangs bereits ausgeführt, umfasst das erfindungsgemäße Verfahren zur Nutzung quantensicherer Schlüssel mit Endgeräteeinrichtungen selbstverständlich auch die Verwendung entsprechender Schlüssel bei der telekommunikativen Übertragung von Nutzdaten durch eine Endgeräteeinrichtung, welche diese quantensicheren Schlüssel gemäß dem zuvor erläuterten Ablauf bei einem QKD-Verbund bezogen hat. Demgemäß können die quantensicheren Schlüssel zur Verschlüsselung von Nutzdaten verwendet werden, welche zwischen der über diese Schlüssel verfügenden Endgeräteeinrichtung und einem Server beziehungsweise einer Servereinrichtung ausgetauscht werden. Dabei kann der betreffende Server, zum Beispiel ein Anwendungsserver oder ein Content-Server, auch Teil eines zu dem QKD-Verbund gehörenden Netzwerkknotens sein, so dass insoweit die zum Datenaustausch mit dem Server verwenden Schlüssel im Grunde direkt bei diesem vorliegen.

Darüber hinaus kann unter Nutzung des Verfahrens aber auch eine Übertragung von Nutzdaten zwischen zwei Endgeräteeinrichtungen untereinander erfolgen, sofern beide Endgeräteeinrichtungen über dieselben Schlüssel verfügen. Dazu ist es gemäß einer Ausbildung der Erfindung vorgesehen, dass eine Endgeräteeinrichtung, welche Schlüssel von einem Netzwerkknoten des QKD-Verbundes anfordert, diesem Netzwerkknoten im Zusammenhang mit der entsprechenden Anforderung mitteilt, dass sie mit einer ganz bestimmten anderen Endgeräteeinrichtung (beispielsweise wird dazu einem Netzwerkknoten des QKD-Verbundes eine telekommunikative Adresse, wie beispielsweise die IP-Adresse, dieser bestimmten anderen Endgeräteeinrichtung mitgeteilt) verschlüsselt kommunizieren will. Durch den Netzwerkknoten des QKD-Verbundes wird dann anhand von ihm dazu gehaltener Datenbankeinträge festgestellt, ob diese andere Endgeräteeinrichtung bereits im Besitz entsprechender quantensicherer Schlüssel ist. Ist dies der Fall, werden gemäß dem bereits erläuterten grundsätzlichen Ablauf dieselben quantensicheren Schlüssel auch an die nunmehr diese anfordernde Endgeräteeinrichtung übermittelt. Andernfalls wird derselbe Satz quantensicherer Schlüssel (beispielsweise 1.000 quantensichere Schlüssel) für beide Endgeräteeinrichtungen nach dem erfindungsgemäßen Verfahren bereitgestellt. Abweichend hiervon ist es aber auch möglich, dass die erste Endgeräteeinrichtung nach einem zuvor bereits erfolgten Bezug quantensicherer Schlüssel vom QKD-Verbund mit einer beispielsweise die IP-Adresse der anderen Endgeräteeinrichtung enthaltenden Nachricht über eine gewünschte verschlüsselte Kommunikation mit dieser anderen Endgeräteeinrichtung bei dem QKD-Verbund eine Übertragung der bei ihr bereits vorliegenden quantensicheren Schlüssel auch an die andere Endgeräteeinrichtung initiiert.

In Weiterbildung des Verfahrens ist dieses vorzugsweise so gestaltet, dass zwischen den beiden Netzwerkknoten des QKD-Verbundes eine Synchronisation dazu erfolgt, welche Schlüssel durch welche Endgeräteeinrichtung bezogen wurden. Dazu werden in einer entsprechenden Datenbank in jedem der beiden Netzwerkknoten des QKD-Verbundes Datensätze abgelegt, welche zumindest jeweils einen quantensicheren Schlüssel, einen diesem quantensicheren Schlüssel zugeordneten Identifikator und Identifikatoren (beispielsweise die E-Mail-Adresse einer mit einer SIM-Karte für den Mobilfunk ausgestatteten Endgeräteeinrichtung, eine eindeutige Rufnummer oder dergleichen) für jede Endgeräteeinrichtung umfassen, an welche ein jeweiliger quantensicherer Schlüssel durch einen Netzwerkknoten des QKD-Verbundes übertragen wurde. Hierdurch ist es egal, bei welchem Netzwerkknoten des QKD-Verbundes eine Endgeräteeinrichtung, die mit einer anderen Endgeräteeinrichtung verschlüsselt kommunizieren will, die dafür erforderlichen quantensicheren Schlüssel bezieht.

Eine zur Lösung der Aufgabe und zur Durchführung des erfindungsgemäßen Verfahrens ausgebildete Endgeräteeinrichtung mit mindestens einer Verarbeitungseinrichtung, nämlich eine telekommunikative Endgeräteeinrichtung zur Nutzung quantensicherer kryptographischer Schlüssel, ist ausgestattet:
- mit einer mittels ihrer Verarbeitungseinrichtung ausführbaren Programmanwendung zur Anforderung von kryptographischen Schlüsseln bei einem Netzwerkknoten eines zur Generierung quantensicherer Schlüssel ausgebildeten QKD-Verbundes sowie zur programmtechnischen Verwaltung bei dem Netzwercknoten bezogener quantensicherer Schlüssel und zur Steuerung des Einsatzes dieser Schlüssel zum Zweck der Verschlüsselung telekommunikativ übertragener Nutzdaten,
- mit Mitteln, welche dazu ausgebildet sind, unter Verwendung dazu in Speichermitteln der Endgeräteeinrichtung gehaltener Telekommunikationsadressen, über zueinander vollständig disjunkte Übertragungswege zwischen der Endgeräteeinrichtung und jedem der beiden Netzwerkknoten des QKD-Verbundes mindestens eine VPN-Verbindung zur Datenübertragung aufzubauen,
- einem HSM, nämlich einem Hardwaresicherheitsmodul zur manipulationssicheren Ablage der bei dem Netzwerkknoten des QKD-Verbundes bezogenen quantensicheren Schlüssel und zur Speicherung der diesen Schlüsseln jeweils zugeordneten Identifikatoren,

Bei einer erfindungsgemäßen Endgeräteeinrichtung muss es sich nicht um ein einzelnes Endgerät für die telekommunikative Datenübertragung handeln. Vielmehr kann es auch um eine Gruppe miteinander interagierender Geräte handeln, von denen mindestens eines für einen telekommunikativen Datenaustausch ausgebildet ist. Dies ist der Grund, warum im Kontext der Darstellung der beanspruchten Erfindung von einer Endgeräteeinrichtung und nicht von einem Endgerät gesprochen wird.

Für die Erfindung sind, insbesondere mit Blick auf die vorstehend erläuterten Ausprägungen des erfindungsgemäßen Verfahrens unter anderem die folgenden beispielhaft erläuterten Anwendungsszenarien denkbar.

### Quantensichere, automotive Kommunikation per Mobilfunk:

Sowohl das autonome Fahren als auch die Integration von digitalen Diensten in Kraftfahrzeuge beziehungsweise Automobile der Zukunft erfordern sichere Kommunikationsverbindungen zwischen den Kraftfahrzeugen/Automobilen, den Herstellern sowie den Dienstanbietern und Dienstleistern. Der Einbau einer zur Durchführung des erfindungsgemäßen Verfahrens geeigneten Endgeräteeinrichtung, zum Beispiel der vorstehend beschriebenen Endgeräteeinrichtung, in die Kommunikationssysteme von Kraftfahrzeugen/Automobilen (für die im Kontext dieses Anwendungsszenarios als synonym angesehenen Begriffe "Kraftfahrzeug" und "Automobil" soll nachfolgend vereinfachend nur noch der Begriff "Automobil" verwendet werden) oder in die Automobile als Teil solcher Kommunikationseinrichtungen erlaubt eine sichere Kommunikation zwischen den verschiedenen Teilnehmern (gegebenenfalls unter Bildung eines ad hoc Netzwerkes) auch in Zeiten real existierender und praktisch einsetzbarer Quantencomputer. Die insoweit - aufgrund ihres Einbaus in ein Automobil - wahlweise als quasistationär oder als mobil zu betrachtende Hardwarelösung dient hierbei als Schlüsseldienstanbieter für nachgelagerte Applikationen, wie zum Beispiel Kommunikationsdienste, Navigation, Übertragung von Wartungsdaten, Überwachung oder Notrufe.

Auch weiterführende quantensichere Kommunikationen, zum Beispiel zwischen dem Automobil und Einrichtungen von Drittanbietern, wie Einrichtungen zum Fahrkartenverkauf für den öffentlichen Personennahverkehr (ÖPNV), wie Einrichtungen zur Parkplatzreservierung oder von Mautstationen lässt sich über die Integration der Hardware realisieren. Die erfindungsgemäße Lösung lässt sogar die sichere Kommunikation zwischen Automobilen untereinander zu, sofern eine schnelle Verbindung zwischen der Identifikation der Autos (beispielsweise per Nummernschild, oder Automobil-ID) und den bereits ausgetauschten Schlüsseln besteht.

Die Sicherheit des Kommunikationsprotokolls lässt sich deutlich steigern, wenn der Schlüsselaustausch über die Mobilfunknetze während der Fahrt des Automobils geschieht. Werden einerseits die Daten zum Bezug der quantensicheren Schlüssel gemäß der vorgestellten Lösung zu unterschiedlichen Zeiten versendet, so führt dies zu einer zeitlichen Diversifizierung. Durchquert das Automobil währenddessen gar mehrere Mobilfunkzellen, so wird andererseits zudem eine örtliche Diversifizierung erreicht. Ein potenzieller Angreifer müsste also neben den disjunkten Netzen auch verschiedene Orte und Zeiten in seinen Angriff einbeziehen.

Ein potenzieller Angreifer müsste, um den Schlüssel zu einer bestimmten Verbindung zu hacken, alle verschiedenen übertragenen Teilinformationen für diesen Schlüssel abhören. Damit müsste er alle disjunkten Verbindungen zu unterschiedlichen Zeiten und Orten anzapfen, die Inhalte speichern und entsprechend miteinander korrelieren. Das Kommunikationssystem des Automobils ist nach Erhalt der zweiten, mittels des Bezugsschlüssels verschlüsselten Nachricht in der Lage die finalen Kommunikationsschlüssel zu dechiffrieren und weitere Schlüssel nachzuladen. Ab diesem Zeitpunkt ist Kommunikation über eine sichere verschlüsselte Verbindung möglich.

### Quantensichere, automotive Kommunikation per Schlüsseltankstelle:

Die heimische Stromtankstelle in der Garage kann zum Beispiel zukünftig nicht mehr nur für die elektrische Aufladung des Akkumulators verwendet werden, sondern gleichzeitig für das Nachladen von Schlüsseln für die sichere Kommunikation.

Dazu wird eine zur Ausführung des Verfahrens geeignete stationäre Endgeräteeinrichtung in die heimische Stromtankstelle integriert und stellt über disjunkte Mobilfunknetze oder über ein Mobilfunknetz und über einen DSL-Festnetzanschluss mittels heimischem Internetrouter, zum Beispiel kabelgebunden über einen Ethernet Anschluss oder kabellos über eine drahtlose WIFI-Schnittstelle Verbindungen zu den Netzwerkknoten des QKD-Verbundes her. Denkbar wäre auch die Nutzung der heimischen WIFI Schnittstelle als dritten Kommunikationsweg, was die gesamte Sicherheit des vorgestellten Verfahrens noch einmal erhöht. Dazu wird das im Rahmen des Verfahrens verwendete Protokoll, nämlich die XOR-Verknüpfung der mittels des QKD-Verbundes erzeugten Zufallszahlen und die Übertragung der XOR-Verknüpfung so erweitert, dass Zufallszahlen aus drei disjunkten Netzen vermischt werden, um den Bezugsschlüssel zu berechnen.

Die Stromtankstelle tauscht während des Tages zu variablen Uhrzeiten Nachrichten mit Netzwerkknoten A und B aus, um quantensichere Schlüssel für ein Automobil zu beziehen. Automobilseitig werden nun neben dem Strom auch in einem Hardware Sicherheitsmodul des Automobils zu speichernde quantensichere Schlüssel getankt. Zur technischen Realisierung wird vorgeschlagen, einen Netzwerkstecker in den Ladestecker zu integrieren. Alternativ ist eine Integration über Powerline in das Ladesystem möglich. Die Schlüssel werden dann während des Ladevorgangs übertragen und im sicheren Schlüsselspeicher der erfindungsgemäß ausgebildeten Endgeräteeinrichtung im Auto vorgehalten.

### Quantensichere, automotive Zug-, ÖPNV-, Flugzeug-, Schiffs- oder Flughafenkommunikation

Analog zur Autokommunikation lassen sich mit der hier vorgestellten Erfindung alle mobilen Verkehrsteilnehmer mit quantensicheren Schlüsseln versorgen. Ein Verkehrsunternehmen (Unternehmen, das Bus, Bahn, Schiff oder Flugzeug betreibt) nutzt zwei QKD Server, um innerhalb des Unternehmens quantensicher Schlüssel an zwei Standorte zu verteilen und diese dort zu speichern. Die vorgestellte technische Lösung wird als Endgeräteeinrichtung in die Kommunikationssysteme von Zügen, Bussen, Flugzeugen oder Schiffen integriert oder als ein Teil davon ausgebildet und die Schlüssel werden über disjunkte Mobilfunknetzwerke bezogen und verteilt. Bei Bus und Bahn kann die Schlüsselverteilung analog zum Automobil kontinuierlich während des täglichen Betriebes geschehen. Bei Schiffen oder Flugzeugen kann die Schlüsselbetankung nicht nur stationär im Hafen oder auf dem Flughafen erfolgen, sondern sie kann auch während der Reise zum Beispiel über verschiedene disjunkte Verbindungen durch Satelliten und mittels anderer terrestrischer Verbindungen (Flugfunk, Schiffsfunk) erfolgen. Dabei können die verschiedenen notwendigen Datenkomponenten für die Schlüsselübertragungen auch zeitlich und damit räumlich voneinander getrennt erfolgen, wodurch die Sicherheit der Schlüssel zusätzlich erhöht wird. Technisch bietet sich für Bus und Bahn dieselbe Lösung an, die vorstehend bereits für das Automobil beschrieben wurde.

Alternativ bietet sich für Flugzeuge und Schiffe auch eine modifizierte Lösung der Schlüsseltankstelle an. Die Verkehrsmittel werden in Häfen beziehungsweise auf Flughäfen und unterwegs per Satellitenfunk betankt und (abgesehen von der Satellitenvariante) elektrisch versorgt. An den Versorgungstellen kann die erfindungsgemäße Lösung implementiert werden. Netzseitig erfolgt der Schlüsselaustauch mit vorzugsweise firmeneigenen Netzwerkknoten zum Beispiel über disjunkte Mobilfunknetze oder/und über Festnetzanschlüsse an stationären Stellplätzen (Liegeplätzen). Verkehrsmittelseitig wird die Möglichkeit der Schlüsselübertragung in die Kommunikationssysteme während des Ladevorgangs integriert.

### Quantensichere Kommunikation für smarte Geräte im Massenmarkt

Smarte Geräte im Massenmarkt, die eine zu erwartende Lebensdauer von mehreren Jahren haben und automatische Funktionen im Namen Ihres Besitzers ausführen werden, benötigen quantensichere und zukunftsfähige Absicherungsmechanismen ihrer Kommunikation. So werden Kühlschränke automatisch Waren nachbestellen, die Hausinstallationssysteme (Heizung, Gas und Strom) automatisch den Wartungsdienst beauftragen oder digitale Assistenzsysteme bei der Planung des Tages unterstützen oder beispielsweise persönliche Geschäftsvorfälle automatisch abwickeln. Im Gesundheitsbereich werden langlebige Implantate oder Sensoren im Allgemeinen sensible Daten im- oder exportieren.

Alle diese Geräte benötigen eine zukunftssichere und langfristige Sicherung ihrer Kommunikation, die durch Quantencomputer gefährdet wird. Ein Einsatz der erfindungsgemäßen Lösung ermöglicht die Sicherung der Kommunikation zwischen smarten Geräten des IoT (Internet of Things) im Massenmarkt und Herstellern beziehungsweise Geräten und Dienstleistern in einem dafür bereitgestellten Eco System.

### Quantensichere Kommunikation in Energienetzen

Die Digitalisierung der Energienetze und somit die bestmögliche und kostengünstigste Versorgung von Industrie und Endkunden mit Energie benötigt signifikante Upgrades der Kommunikationsinfrastruktur der Energieversorger. Die bedarfsgerechte Erzeugung von Energie, die optimale Leitung der Energie vom Erzeuger zum Benutzer und die Digitalisierung der Stromanschlüsse beim Endkunden verlangen nach smarten Netzgeräten und sicherer Kommunikation.

Die vorgestellte Erfindung lässt sich leicht in die Kommunikationsinfrastruktur eines Energieversorgers integrieren und stellt den sicheren Datenaustausch zwischen dem Versorger und seinen Netzelementen per Mobilfunk sicher. Die Kommunikation unter Kraftwerken, Leitungselementen bis hin zu den intelligenten Stromzählern beim Kunden ließe sich quantenkryptographisch sicher und damit zukunftssicher implementieren.

### Kryptographisch sichere Kommunikation von Wahlverfahren im Massenmarkt

Die Sicherheit der Stimmabgabe in Wahlverfahren ist von essenzieller Bedeutung für die Demokratie, wobei die Wahlberechtigung, Stimmabgabe sowie Auszählung der Stimme als auch die Anonymität des Wählers sowie das nachprüfbare Wahlergebnis geschützt und sichergestellt werden müssen.

Die erfindungsgemäße Lösung lässt sich leicht in die Kommunikationsinfrastruktur der bestehenden Kommunikationsnetze einbringen, um entsprechende Wahlverfahren durch quantenkryptographische Maßnahmen und Verfahren vor Manipulationen zu schützen.

Anhand von Zeichnungen sollen nachfolgend Ausführungsbeispiele für die erfindungsgemäße Endgeräteeinrichtung gegeben und nochmals Details des erfindungsgemäßen Verfahrens erläutert werden. Die Zeichnungen zeigen im Einzelnen:
- Fig. 1:: eine erste mögliche Ausbildungsform einer erfindungsgemäßen Endgeräteeinrichtung,
- Fig. 2:: eine weitere Ausbildungsform der erfindungsgemäßen Endgeräteeinrichtung,
- Fig. 3:: die schematische Darstellung eines zur Bereitstellung von kryptographischen Schlüsseln für Endgeräteeinrichtungen nach dem erfindungsgemäßen Verfahren ausgebildeten Netzwerkknotens,
- Fig. 4:: ein grobes Schema eines QKD-Verbundes mit zwei Netzwerkknoten und einer Schlüssel von dem QKD-Verbund beziehenden Endgeräteeinrichtung.

Zunächst soll an dieser Stelle nochmals daran erinnert werden, dass es sich bei einer erfindungsgemäß ausgebildeten Endgeräteeinrichtung um ein einzelnes Endgerät für die telekommunikative Datenübertragung oder aber auch um eine Gruppe miteinander interagierender Endgeräte handeln kann, von denen mindestens eines für einen telekommunikativen Datenaustausch ausgebildet ist.

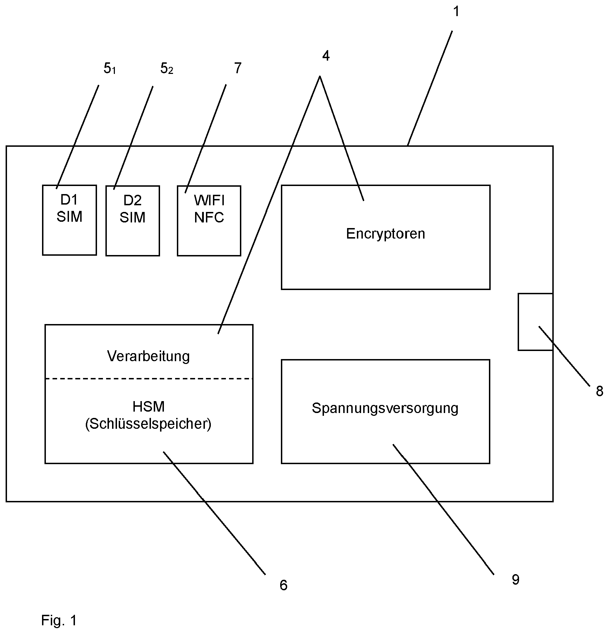

Die Fig. 1 zeigt eine mögliche Ausbildungsform der erfindungsgemäßen Endgeräteeinrichtung 1 in einer groben schematischen Darstellung, wobei sich die Darstellung und die nachfolgend dazu gegebenen Erläuterungen im Wesentlichen auf die erfindungsrelevanten Bestandteile der betreffenden Endgeräteinrichtung 1 beschränken. Für das gezeigte Beispiel sei angenommen, dass es sich bei dieser Endgeräteeinrichtung 1 um ein einzelnes, für einen telekommunikativen Datenaustausch ausgebildetes Gerät handelt. Genauer gesagt handelt es sich bei dem in der Fig. 1 dargestellten Beispiel um eine mobile Variante einer solchen Endgeräteeinrichtung 1. Auf die Darstellung von Sende- und Empfangseinheiten, Antennen und dergleichen wurde in der Fig. 1 bewusst verzichtet.

In Bezug auf die Erfindung sind besonders wichtige dargestellte Bestandteile der mobilen Endgeräteeinrichtung 1:
- 4: Verarbeitungseinrichtung ("Encryptoren", "Verarbeitung",
- 5₁, 5₂: Mittel für den Aufbau telekommunikativer Verbindungen (VPN-Verbindungen),
- 6: HSM (Hardware Sicherheitsmodul) mit Schlüsselspeicher.

Die mobile Endgeräteeinrichtung umfasst weiterhin:
- 7, 7': Funkmodul (WIFI und/oder NFC),
- 8: Anschluss zur leitungsgebundenen Verbindung mit anderen Geräten.

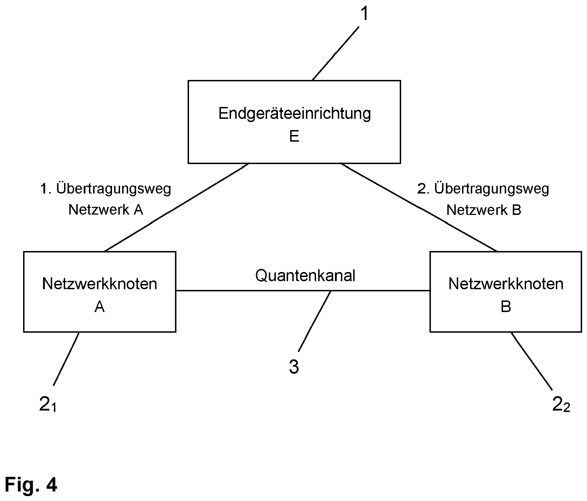

Die Endgeräteeinrichtung 1 ist mit einer Programmanwendung zur Ausführung des erfindungsgemäßen Verfahrens ausgestattet, welche von der Verarbeitungseinrichtung 4 der mobilen Endgeräteeinrichtung 1 ausführbar ist zur Anforderung von kryptographischen Schlüsseln bei einem Netzwerkknoten 2₁, 2₂ eines (hier nicht gezeigten) QKD-Verbundes (siehe dazu Fig. 4) sowie zur programmtechnischen Verwaltung entsprechender quantensicherer Schlüssel und zur Steuerung des Einsatzes dieser Schlüssel, zum Beispiel für die Verschlüsselung durch die mobile Endgeräteeinrichtung 1 mit einer anderen Einrichtung, beispielsweise einem Server in einem Weitverkehrsnetz oder einer anderen Endgeräteeinrichtung, telekommunikativ ausgetauschter Nutzdaten.

Bei dem mit "Encryptoren" bezeichneten Teil handelt es sich um einen Teil der Verarbeitungseinrichtung 4, welcher insbesondere die Verschlüsselung zu übertragender, dabei von Endgeräteeinrichtung 1 ausgesendeter sowie die Entschlüsselung durch die Endgeräteeinrichtung 1 verschlüsselt empfangener Nutzdaten vornimmt. Dieser ist zudem für die Entschlüsselung der durch die Endgeräteeinrichtung 1 bei dem QKD-Verbund bezogenen und mittels des Bezugsschlüssels verschlüsselten größeren Zahl quantensicherer Schlüssel und zugehöriger Identifikatoren zuständig. Der mit "Verarbeitung" bezeichnete Teil der Verarbeitungseinrichtung 4 steuert insbesondere die bitweise XOR-Verknüpfung aller von den Netzwerknoten 2₁, 2₂ zusammen mit demselben Hashwert empfangenen XOR-verknüpften Zufallszahlen zum Erhalt des Schlüsseldatencontainers, die Extraktion des Bezugsschlüssels und seines Identifikators aus diesem Schlüsseldatencontainer sowie die Verwaltung der in dem HSM (6) manipulationssicher gespeicherten quantensicheren Schlüssel und Identifikatoren.

Bei einer mobilen Endgeräteeinrichtung 1 kann es sich um ein Gerät handeln welches gemeinsam mit anderen Endgeräten nutzbar ist oder aber auch um einen integralen Bestandteil eines telekommunikativen (mobilen) Endgeräts, wie um den Bestandteil eines zur Durchführung des Verfahrens, insbesondere für den in erfindungsgemäßer Weise erfolgenden Bezug quantensicherer Schlüssel von einem QKD-Verbund ausgebildetes Smartphones oder eines entsprechend ausgebildeten Tablet-PCs. In der Fig. 1 ist die erstgenannte Variante gezeigt, also eine als mobiles Gerät ausgebildete Endgeräteeinrichtung 1, welche gemeinsam mit anderen Geräten, zum Beispiel für die verschlüsselte Datenübertragung, nutzbar ist und daher zur Koppelung mit derartigen Geräten über ein Funkmodul 7 (WIFI, NFC) für die drahtlose Kopplung mit derartigen Geräten und über (mindestens) einen Anschluss 8 zur leitungsgebundenen Verbindung (gegebenenfalls auch über optischen Leiter) mit der Endgeräteeinrichtung 1 genutzter Geräte verfügt.

Bei dem mit "Encryptoren" bezeichneten Teil der in der schematischen Darstellung gezeigten Verarbeitungseinrichtung 4 kann es sich daher um den Teil einer speziell für die Endgeräteeinrichtung 1 konzipierten Verarbeitungseinrichtung 4 oder - im Falle der Variante einer beispielsweise in ein Mobilfunkgerät, wie ein Smartphone, integrierten Endgeräteeinrichtung 1 sowohl um eine ohnehin vorhandene zentrale Verarbeitungseinheit (zum Beispiel des Smartphones) oder um einen Teil davon oder aber auch um einen eigens zur Verarbeitung der zur Ausführung des erfindungsgemäßen Verfahrens erforderlichen Programmanwendung vorgesehenen Verarbeitungseinrichtungsteil handeln.

Weitere wesentliche Bestandteile der erfindungsgemäßen Endgeräteeinrichtung 1 sind das HSM 6, also das Hardwaresicherheitsmodul, sowie die Mittel 5₁, 5₂, mit deren Hilfe durch die mobile Endgeräteeinrichtung 1 Verbindungen zu den Netzwerkknoten 2₁, 2₂ eines QKD-Verbundes (siehe Fig. 4) über zwei vollständig disjunkte Übertragungswege aufgebaut werden können. In dem Beispiel handelt es sich bei den vorgenannten Mitteln 5₁, 5₂ um (nicht gezeigte) Sende- und Empfangseinheiten für den Mobilfunk sowie um zwei mit diesen Sende- und Empfangseinheiten zu verwendende SIM-Module. Demnach kann es sich beispielsweise bei der Endgeräteeinrichtung 1 um ein Dual-SIM-Gerät handeln.

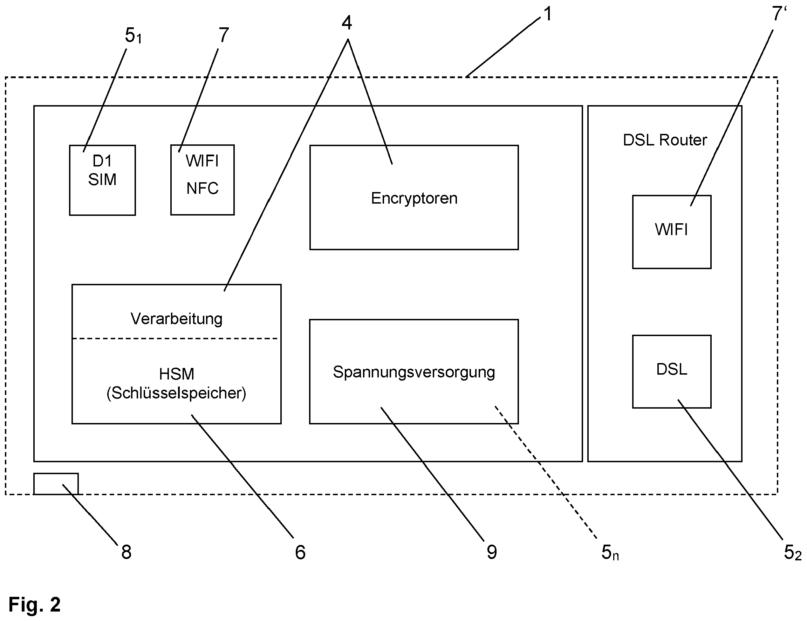

In jedem Falle ist die Ausbildung der Endgeräteeinrichtung 1 und der von dieser aufgenommenen SIM-Module (Mittel 5₁, 5₂) derart, dass die SIM-Module die Herstellung einer Mobilfunkverbindung zu Netzwerkknoten 2₁, 2₂ eines QKD-Verbundes (siehe Fig. 4) über zwei zueinander vollständig diskunkte Übertragungswege ermöglichen. Durch die Endgeräteeinrichtung 1 von dem QKD-Verbund bezogene quantensichere Schlüssel werden, wie bereits ausgeführt, in dem Hardwaresicherheitsmodul 6 der Endgeräteeinrichtung 1 manipulationssicher abgelegt. In dem HSM 6 werden diese Schlüssel durch die Verarbeitungseinrichtung 4 verwaltet und aus ihm zur Verwendung für die Verschlüsselung zu übertragender Nutzdaten im Einsatzfall abgerufen. Die Spannungsversorgung 9 (hier vorzugsweise ein Akku mit Lademöglichkeit) ist in der Fig. 1 nur insoweit vervollständigend dargestellt, als auch die in der Fig. 2 gezeigte Ausbildungsform der erfindungsgemäßen Endgeräteeinrichtung 1 eine solche Einheit umfasst, die aber gemäß einer Variante dieser Ausbildungsform noch eine zusätzliche Funktion hat.

Die Fig. 2 zeigt eine andere mögliche Ausbildungsform einer erfindungsgemäßen Endgeräteeinrichtung 1. Auch diese umfasst als wesentliche Komponenten:
- 4: Verarbeitungseinrichtung ("Encryptoren", "Verarbeitung",
- 5₁ bis 5ₙ: Mittel für den Aufbau telekommunikativer Verbindungen (VPN-Verbindungen),
- 6: HSM (Hardware Sicherheitsmodul) mit Schlüsselspeicher.

Sie umfasst weiterhin:
- 7, 7': Funkmodul (WIFI und/oder NFC),
- 8: Anschluss zur leitungsgebundenen Verbindung mit anderen Geräten,
- 9: Netzteil mit gegebenenfalls erweiterter Funktionalität (5ₙ).

Hierbei handelt es sich um eine Ausbildungsform für den stationären Einsatz. Dies ist daran zu erkennen, dass die Mittel 5₁, 5₂ zur Verbindung mit einem Weitverkehrsnetz einen Router mit einer DSL-Abschlusseinrichtung 5₂ umfassen. Gegebenenfalls können diese Mittel - wie in dem gezeigten Beispiel durch die zu dem zugehörigen Bezugszeichen führende gestrichelte Linie angedeutet - auch Mittel 5ₙ zum Aufbau einer Power-Line-Verbindung, also einer unter Nutzung einer Stromversorgungsleitung aufzubauenden telekommunikativen Verbindung, umfassen. Der Powerline-Anschluss (5ₙ) kann aber auch zur Verbindung der Endgeräteeinrichtung 1 mit anderen, mit quantensicheren Schlüssel "zu betankenden" Geräten dienen.

Für den Aufbau mindestens zweier zueinander disjunkter Verbindungen zu einem QKD-Verbund verfügt die Endgeräteeinrichtung 1 also einerseits über eine Mobilfunkeinrichtung mit einem SIM-Modul (Mittel 5₁) und andererseits über eine Einheit (Mittel 5₂) zum Betrieb an einem DSL-Festnetzanschluss sowie gegebenenfalls außerdem über einen Power-Line-Anschluss (Mittel 5ₙ) als Bestandteil eines Netzteils 9 beziehungsweise einer Spannungsversorgungseinrichtung.

Wie aus der Figur ersichtlich, verfügt die im Beispiel gezeigte Endgeräteeinrichtung 1 zudem über ein Funkmodul für WLAN- beziehungsweise WIFI und NFC. Demnach ist die Endgeräteeinrichtung 1 auch für den Betrieb in einem lokalen Netzwerk (LAN) ausgebildet und kann daher im häuslichen Bereich oder in einem Büro oder aber auch integriert in eine Stromtankstelle jeweils im Wege des Aufbaus einer WLAN-Verbindung mit mehreren telekommunikativen Endgeräten, wie beispielsweise Smartphones, Tablet-PCs, Laptops oder automobiler Kommunikationstechnik, genutzt werden. Alle mit der Endgeräteeinrichtung 1 genutzten beziehungsweise zu dieser gehörenden Geräte können Daten mit einer entfernten Gegenstelle, also beispielsweise über ein Weitverkehrsnetz, austauschen und diese Daten dabei mittels quantensicherer kryptographischer Schlüssel verschlüsseln.

Wie die in der Fig. 1 gezeigte Endgeräteeinrichtung 1 verfügt die in der Fig. 2 gezeigte Endgeräteeinrichtung 1 zur Ausführung des erfindungsgemäßen Verfahrens ebenfalls über eine den Bezug, die Abspeicherung (Verwaltung) und die Verwendung quantensicherer Schlüssel managende Verarbeitungseinrichtung 4. Zur Ablage der unter Nutzung der zwei disjunkten Übertragungswege (einmal Mobilfunk, einmal DSL/Festnetz) bezogenen quantensicheren Schlüssel werden diese in dem auch hier vorhandenen Hardwaresicherheitsmodul (HSM 6) bis zu ihrer Verwendung gemeinsam mit ihnen zugeordneten Identifikatoren abgespeichert.

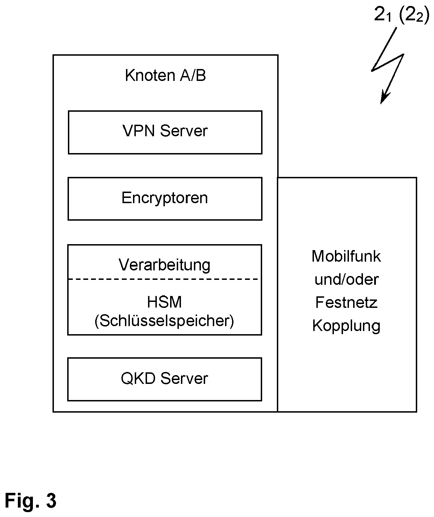

Die Fig. 3 zeigt wesentliche Einheiten eines mit der Erfindung zu nutzenden, als Teil eines QKD-Verbundes angeordneten Netzwerkknotens 2₁ oder 2₂. Auf die Vergabe von Bezugszeichen ist in der Darstellung verzichtet worden, da die Ausbildung des Netzwerkknotens 2₁ (2₂) selbst nicht beansprucht wird. Der jeweilige Netzwerkknoten 2₁ (2₂) ist für Endgeräteeinrichtungen 1, welche bei dem QKD-Verbund quantensichere Schlüssel beziehen wollen, über Mobilfunk und/oder über das Festnetz erreichbar. Hierbei kann es gegebenenfalls so sein, dass einer der beiden Netzwerkknoten 2₁ (2₂) des QKD-Verbundes ausschließlich über das Mobilfunknetz zu erreichen ist, wohingegen der andere Netzwercknoten 2₁ (2₂) des Verbundes an das Weitverkehrsnetz nur über das Festnetz angebunden ist.

Soweit beide Netzwerkknoten 2₁ (2₂) des QKD-Verbundes über Mobilfunk kontaktierbar sind, muss in jedem Falle sichergestellt sein, dass sie dabei durch eine quantensichere Schlüssel anfordernde Endgeräteeinrichtung 1 über zueinander disjunkte Übertragungswege (jeder Netzwerkknoten 2₁, 2₂ über einen anderen Übertragungsweg) erreichbar sind. Da die quantensicheren Schlüssel gemäß dem Verfahren als auch vorzugsweise die mit ihnen zu verschlüsselnde Nutzdaten jeweils über VPN-Tunnel ausgetauscht werden, weist der Netzwerkknoten 2₁ (2₂) weiterhin einen VPN-Server auf. Darüber hinaus weist er als wesentlichen Bestandteil einen QKD-Server auf, welcher den Aufbau einer einen Quantenkanal umfassenden QKD-Verbindung mit dem anderen zu dem QKD-Verbund gehörenden Netzwerkknoten 2₁, 2₂ sowie die Generierung der dann in beiden Netzwerkknoten 2₁, 2₂ des QKD-Verbundes vorliegenden quantensicheren Schlüssel steuert. Die von dem QKD-Verbund erzeugten quantensicheren Schlüssel werden in den Netzwerkknoten 2₁, 2₂ des QKD-Verbundes jeweils in einem in jedem der Netzwerkknoten 2₁, 2₂ ausgebildeten Hardwaresicherheitsmodul (HSM) bis zu ihrem Abruf durch eine Endgeräteeinrichtung abgespeichert.

Die Fig. 4 zeigt eine Anordnung mit einem durch die beiden Netzwerkknoten 2₁, 2₂ gebildeten QKD-Verbund und einer quantensichere Schlüssel nach dem erfindungsgemäßen Verfahren von diesem QKD-Verbund beziehenden Endgeräteeinrichtung 1. Durch die Netzwerkknoten 2₁, 2₂ des QKD-Verbundes, welche jeweils die wesentlichen in der Fig. 3 gezeigten Einheiten aufweisen, werden unter Nutzung der zwischen ihnen bestehenden QKD-Verbindung 3 (Quantenkanal) fortwährend quantensichere Zufallszahlen, welche einen Schlüssel oder einen Identifikator oder aber, bei entsprechender Bitlänge eine Kombination von Schlüssel und Identifikator darstellen, beispielsweise nach dem BB84-Protokoll erzeugt.

Die entsprechenden Zufallszahlen und die durch sie repräsentierten Inhalte (Schlüssel, Identifikator oder Kombination daraus), liegen aufgrund des Prinzips von QKD-Verfahren und somit auch der Eigenschaften des BB84-Protokolls jeweils identisch in beiden Netzwerkknoten 2₁, 2₂ des QKD-Verbundes vor. Hier werden diese Zufallszahlen, das heißt die durch sie repräsentierten oder aus ihnen herleitbaren Schlüssel mit zugehörigen Identifikatoren in dem jeweiligen HSM der Netzwerkknoten 2₁, 2₂ gespeichert.

Nachfolgend soll, ausgehend von der in der Fig. 4 gezeigten Konfiguration, ein Beispiel für einen Teil des Ablaufs beim Bezug quantensicher Schlüssel durch die Endgeräteeinrichtung 1 gegeben werden.

Innerhalb des wiedergegebenen Ablaufs stehen:
- Sⱼ, Sⱼ₊₁, Sⱼ₊₂ und Sⱼ₊₃: für 4 beispielhafte durch den QKD-Verbund erzeugte und in beiden Netzwerkknoten 2₁, 2₂ des Verbundes vorliegende 512 bit lange Zufallszahlen,
- Kⱼ₊₆, Kⱼ₊₇: für 2 gleichlange (256 bit) aus der Zufallszahl Sⱼ₊₃ gebildete Bitfolgen, wobei Kⱼ₊₆ als Bezugsschlüssel und Kⱼ₊₇ als dessen Identifikator dient,
- ⊕: für den Operator zur Ausführung einer bitweisen XOR-Verknüpfung

Bei der Übermittlung des Bezugsschlüssels und des mit diesem assoziierten Identifikators an die Endgeräteeinrichtung 1 (E), welche dann ihrerseits - verschlüsselt mit dem Bezugsschlüssel eine Vielzahl jeweils Schlüssel und Identifikatoren codierende Zufallszahlen von einem der Netzwerkknoten 2₁, 2₂ (A, B) nachladen kann, vollzieht sich beispielsweis folgender Ablauf:

| Netzwerkknoten **A** | Endgeräteeinrichtung **E** | Netzwerkknoten **B** |
|---|---|---|
| bilde und übertrage an **E** Sⱼ⊕Sⱼ₊₁ und Hash(Sⱼ₊₁ ) | | bilde und übertrage an **E** Sⱼ₊₁⊕Sⱼ₊₂ und Hash(Sⱼ₊₁) sowie Sⱼ⊕Sⱼ₊₂⊕Sⱼ₊₃ und Hash(Sⱼ₊₁) |
| behalte Sⱼ₊₃ und lösche außerhalb des HSM alle mit dem Hash(Sⱼ₊₁) verknüpften Daten | suche alle Nachrichten mit demselben Hash(Sⱼ₊₁) und verknüpfe alle (XOR) Sⱼ⊕Sⱼ₊₁⊕Sⱼ₊₁⊕Sⱼ₊₂⊕Sⱼ⊕Sⱼ₊₂⊕Sⱼ₊₃ = Sⱼ₊₃ | behalte Sⱼ₊₃ und lösche außerhalb des HSM alle mit dem Hash(Sⱼ₊₁) verknüpften Daten |
| | behalte Sⱼ₊₃, extrahiere daraus Kⱼ₊₆ und Kⱼ₊₇ und speichere diese im HSM von **E** sowie lösche außerhalb des HSM alle mit dem Hash(Sⱼ₊₁) verknüpften Daten | |

Die Extraktion von Kⱼ₊₆ (Bezugsschlüssel) und Kⱼ₊₇ (Identifikator, ID) aus Sⱼ₊₃ kann beispielsweise erfolgen, indem Sⱼ₊₃ als 512 bit lange Zufallszahl in zwei 256 bit lange Teile zerlegt wird, wobei es sich bei Kⱼ₊₆ um die ersten (unteren) 256 bit und bei Kⱼ₊₇ um die anderen (oberen) 256 bit von Sⱼ₊₃ handelt. Denkbar wäre aber auch eine Zerlegung derart, dass die vom Index (Potenz von 2) her geradzahligen bits als Bezugsschlüssel und die ungeradzahligen bits als dessen Identifikator verwendet werden. Selbstverständlich ist aber auch jede andere, eineindeutige Vorschrift für eine Zerlegung der Bitfolge von Sⱼ₊₃ in den Bezugsschlüssel und dessen Identifikator denkbar. Dies ist lediglich eine Festlegungs- und Implementierungsfrage. Zudem kann die Zerlegung des Schlüsseldatencontainers in den Bezugsschlüssel und seinen Identifikator entsprechend der dafür jeweils vorgesehenen Vorschrift auch zeitlich gesteuert erfolgen.

Bezüglich der Zerlegung der Zufallszahl Sⱼ₊₃ in den Bezugsschlüssel und seinen Identifikator sowie deren Abspeicherung kann die Reihenfolge außerdem auch umgekehrt sein. In diesem Falle würde zunächst die 512 bit lange Zufallszahl im HSM abgespeichert und diese erst zum Zweck der Anforderung einer größeren Zahl von Schlüsseln (mit jeweils zugehörigen Identifikatoren) in Bezugsschlüssel und mit diesem assoziierten Identifikator zerlegt werden.

Darüber hinaus kann der vorstehend veranschaulichte Ablauf gegebenenfalls auch mehrfach ausgeführt werden, so dass dann im HSM der Endgeräteeinrichtung 1 zunächst mehrere Paare 256 bit langer Zufallszahlen abgelegt werden, welche jeweils einen Bezugsschlüssel und einen zugehörigen Identifikator für die Anforderung einer größeren Zahl mittels des jeweiligen Bezugsschlüssels verschlüsselter quantensicherer Schlüssel (und zugehöriger Identifikatoren) repräsentieren.

Was hierbei die Zufallszahlen Sⱼ bis Sⱼ₊₃ anbelangt so handelt es sich bei diesen, wie ausgeführt, um 512 bit lange Zufallszahlen. Die Zufallszahlen können durch den QKD-Verbund entweder unmittelbar mit dieser Bitlänge erzeugt oder durch die Netzwerkknoten 2₁, 2₂ (in jeweils gleicher Zuordnung und gleicher Weise) aus zwei vom QKD-Verbund generierten 256 bit langen Zufallszahlen zusammengesetzt werden. Im erstgenannten Fall muss in den Netzwerkknoten 2₁, 2₂ des QKD-Verbundes ebenfalls die auch in der Endgeräteeinrichtung 1 angewendete Zerlegungsvorschrift zur Extraktion des Bezugsschlüssels einerseits und des zugehörigen Identifikators andererseits angewandt werden. Dagegen liegen im zuvor letztgenannten Fall der Bezugsschlüssel und der Identifikator bereits in den Netzwerkknoten 2₁, 2₂ des QKD-Verbundes vor und werden für die in Form von XOR-Verknüpfungen Übertragung an die Endgeräteeinrichtung 1, ebenso wie drei andere Paare jeweils 256 bit langer Zufallszahlen, zu einer 512 bit langen Zufallszahl S (im Falle von Bezugsschlüssel und zugehörigem Identifikator - Sⱼ₊₃) zusammengefügt. Hierbei ist dann die Vorschrift, nach welcher aus Sⱼ₊₃ in der Endgeräteeinrichtung 1 der Bezugsschlüssel Kⱼ₊₆ und dessen Identifikator Kⱼ₊₇ extrahiert werden, komplementär zur der Weise ihrer Zusammenfügung zu einer als Teil einer XOR-Verknüpfung zu übertragenden 512 bit langen Zufallszahl. Mit Bezug hierauf wurden die beispielhaft für die Zufallszahlen angegebenen Indizes gewählt, gemäß welcher Kⱼ und Kⱼ₊₁ zu Sⱼ, Kⱼ₊₂ und Kⱼ₊₃ zu Sⱼ₊₁, Kⱼ₊₄ und Kⱼ₊₅ zu Sⱼ₊₂ sowie Kⱼ₊₆ und Kⱼ₊₇ zu Sⱼ₊₃ zusammengefügt werden.

Im Hinblick auf die Übermittlung des Bezugsschlüssels und des zugehörigen Identifikators sowie auf den im Patentanspruch 2 dargestellten detaillierten Ablauf sei an dieser Stelle der Vollständigkeit halber noch darauf hingewiesen, dass es selbstverständlich auch möglich ist, den Bezugsschlüssel und seinen Identifikator (vorzugsweise unmittelbar aufeinanderfolgend) getrennt voneinander an die Endgeräteeinrichtung 1 zu übermitteln. Hierbei würde sich der vorstehend geschilderte Ablauf in analoger Weise zwei Mal vollziehen - ein Mal zur Übermittlung eines ausschließlich den Bezugsschlüssel umfassenden Schlüsseldatencontainers und ein Mal zur Übermittlung eines ausschließlich seinen Identifikator umfassenden Schlüsseldatencontainers. Dabei würden jeweils mindestens 4 XOR-Verknüpfungen aus bitweise XOR-verknüpften 256 bit langen Zufallszahlen übertragen, wobei selbstverständlich zur Übermittlung des Bezugsschlüssels andere der durch den QKD-Verbund erzeugten Zufallszahlen miteinander XOR-verknüpft würden, als bei der Übermittlung des zugehörigen Identifikators. Es müsste dann selbstverständlich auch keine Trennung der jeweils eingehenden Schlüsseldatencontainer in Bezugsschlüssel und Identifikator erfolgen. Auch ein solcher Gesamtablauf - getrennte Übermittlung von Bezugsschlüssel und Identifikator sowie anschließender Bezug einer Mehrzahl quantensicherer Schlüssel durch Übermittlung mittels des Bezugsschlüssels verschlüsselter Daten mit entsprechenden Bitfolgen - soll ausdrücklich von der Erfindung umfasst sein.

Nachfolgend soll beispielhaft noch ein möglicher Ablauf für den Bezug einer größeren Zahl quantensicherer Schlüssel (und jeweils zugehöriger Identifikatoren) unter Verwendung des gemäß dem vorstehend erläuterten Ablauf zusammen mit einem assoziierten Identifikator übermittelten Bezugsschlüssels gezeigt werden. Dieser kann sich beispielsweise wie folgt vollziehen:

| Netzwerkknoten **A** | Endgeräteeinrichtung **E** | Netzwerkknoten **B** |
|---|---|---|
| | | |
| | wähle ein beliebiges Paar aus Bezugsschlüssel und Identifikator (Kⱼ₊₆, Kⱼ₊₇) | |
| | | |
| | übertrage Kj+7 an **A** | |
| | | |
| suche den zu Kⱼ₊₇ den passenden Bezugsschlüssel Kⱼ₊₆ aus lokalem HSM | | |
| | | |
| Erzeuge oder nutze aus vorliegendem Vorrat z. B. 2000 Zufallszahlen 256 bit lang und erzeuge daraus 1000 Paare | Empfange Nachrichten (Daten) mit Paaren aus Schlüssel und Identifikator und speichere sie zur späteren Verwendung im HSM von **E** sowie lösche | |
| (Schlüssel, Identifik.) und übertrage diese an **E** verschlüsselt mit AES unter Verwendung von Kⱼ₊₆. Speichere die Paare im HSM, lösche sie außerhalb davon nach Übertragung Synchronisiere (Schlüssel, Identifikator) mit Netzwerkknoten **B.** | sie außerhalb davon. | |
| | | empfange/syn-chronisiere Paare (Schlüssel, Identi-fikator) von/mit Netzwerkknoten **A** |

## Patentansprüche

1. Verfahren zur Nutzung quantensicherer kryptographischer Schlüssel mit telekommunikativen Endgeräteeinrichtungen (1), welches einer jeweiligen, dafür ausgebildeten Endgeräteeinrichtung (1) die Verwendung quantensicherer Schlüssel ermöglicht, ohne selbst über quantentechnische Mittel zu deren Erzeugung zu verfügen, wobei die Endgeräteeinrichtung (1) die quantensicheren Schlüssel durch Anforderung bei einem fortwährend quantensichere Zufallszahlen erzeugenden, von zwei in einer Quantum Key Distribution Verbindung stehenden Netzwerkknoten (2₁, 2₂) gebildeten QKD-Verbund bezieht, indem bei einer durch die Endgeräteeinrichtung (1) erfolgenden Anforderung quantensicherer Schlüssel von den Netzwerkknoten (2₁, 2₂) des QKD-Verbundes auf wenigstens zwei zueinander disjunkten Wegen mehrere voneinander verschiedene, aus von dem QKD-Verbund erzeugten Zufallszahlen durch bitweise Verknüpfung gebildete XOR-Verknüpfungen über VPN-Verbindungen an die Endgeräteeinrichtung (1) übertragen werden und indem die dazu ausgebildete Endgeräteeinrichtung (1) aus diesen XOR-Verknüpfungen einen auch bei den Netzwerkknoten (2₁, 2₂) des QKD-Verbundes vorliegenden quantensicheren Bezugsschlüssel extrahiert, der verwendet wird zur symmetrischen Verschlüsselung in einem nachfolgenden Übertragungsvorgang von einem der Netzwerkknoten (2₁, 2₂) des QKD-Verbundes an die Endgeräteeinrichtung (1) übertragener Daten, welche eine größere Anzahl von dem QKD-Verbund erzeugter Zufallszahlen umfassen, aus denen die sie empfangende Endgeräteeinrichtung (1) mehrere, ebenfalls in beiden Netzwerkknoten (2₁, 2₂) des QKD-Verbundes vorliegende kryptographische Schlüssel extrahiert und zur späteren Verwendung manipulationssicher in einem Speicher der Endgeräteeinrichtung (1) ablegt.

2. Verfahren nach Anspruch 1, **dadurch gekennzeichnet, dass**
a.) im Falle einer durch die Endgeräteeinrichtung (1) erfolgenden Anforderung quantensicherer Schlüssel in den beiden Netzwerkknoten (2₁, 2₂) des QKD-Verbundes insgesamt aus von dem QKD-Verbund erzeugten Zufallszahlen durch bitweise Verknüpfung mindestens vier voneinander verschiedene XOR-Verknüpfungen gebildet werden, wobei eine dieser Zufallszahlen einen Schlüsseldatencontainer darstellt, und
b.) ein Teil der gemäß a.) gebildeten XOR-Verknüpfungen von einem der Netzwerkknoten (2₁, 2₂) des QKD-Verbundes über einen ersten Übertragungsweg und die übrigen dieser XOR-Verknüpfungen von dem anderen Netzwerkknoten (2₁, 2₂) des QKD-Verbundes über einen zu dem ersten Übertragungsweg vollständig disjunkten zweiten Übertragungsweg an die dafür ausgebildete Endgeräteeinrichtung (1) übertragen werden, wobei zusammen mit jeder XOR-Verknüpfung ein jeweils aus derselben Zufallszahl gebildeter identischer Hashwert an die Endgeräteeinrichtung (1) übertragen wird, und
c.) alle bei der Endgeräteeinrichtung (1) zusammen mit einem identischen Hashwert eingehenden XOR-Verknüpfungen bitweise miteinander XOR-verknüpft werden, wobei die gemäß a.) erzeugten sowie gemäß b.) an die Endgeräteeinrichtungen (1) übertragenen XOR-Verknüpfungen so gebildet werden, dass das Ergebnis der in der Endgeräteeinrichtung (1) erfolgenden bitweisen XOR-Verknüpfung aller jeweils zusammen mit dem identischen Hashwert übertragenen XOR-Verknüpfungen die als Schlüsseldatencontainer dienende quantensichere Zufallszahl ist, und
d.) in der Endgeräteeinrichtung (1) aus der als Schlüsseldatencontainer dienenden quantensicheren Zufallszahl eine als Bezugsschlüssel dienende Bitfolge und eine als Identifikator für diesen Bezugsschlüssel dienende Bitfolge extrahiert werden, durch Anwendung einer Vorschrift, welche dafür auch in den Netzwercknoten (2₁, 2₂) angewendet wird oder komplementär zu einer in den Netzwercknoten (2₁, 2₂) bei der Erzeugung des Schlüsseldatencontainers, unter Zusammenführung des Bezugsschlüssel und seines Identifikators, angewendeten Vorschrift ist, und
e.) der mit dem gemäß d.) gebildeten Bezugsschlüssel assoziierte Identifikator durch die Endgeräteeinrichtung (1) für den Bezug mehrerer kryptographischer Schlüssel an einen der Netzwerkknoten (2₁, 2₂) des QKD-Verbundes übertragen wird und
f.) von dem den mit dem Bezugsschlüssel assoziierten Identifikator empfangenden Netzwerkknoten (2₁, 2₂) des QKD-Verbundes eine größere Anzahl der durch den QKD-Verbund erzeugten quantensicheren Zufallszahlen, gesichert durch Verschlüsselung mit dem Bezugsschlüssel an die anfordernde Endgeräteeinrichtung (1) übertragen wird und
g.) aus den Daten mit den unter Verschlüsselung mit dem Bezugsschlüssel übertragenen Zufallszahlen in der sie empfangenden Endgeräteeinrichtung (1) eine endsprechende Anzahl später von der Endgeräteeinrichtung (1) zu verwendender kryptographischer Schlüssel und zu jedem dieser Schlüssel ein mit ihm assoziierter Identifikator extrahiert sowie in einem manipulationssicheren Speicher der dafür ausgebildeten Endgeräteinrichtung (1) abgelegt werden, wobei diese Schlüssel und die jeweils mit ihnen assoziierten Identifikatoren aus den empfangenen Zufallszahlen gemäß einer Vorschrift extrahiert werden, welche dafür auch in den Netzwerkknoten (2₁, 2₂) des QKD-Verbundes angewendet wird oder welche komplementär ist zu einer in den Netzwerkknoten (2₁, 2₂) bei der Erzeugung einer jeweiligen, einen Schlüssel und dessen Identifikator umfassenden Bitfolge angewendeten Vorschrift.

3. Verfahren nach Anspruch 2, **dadurch gekennzeichnet, dass** es sich bei der zur Bildung des Hashwertes verwendeten Zufallszahl um eine der auch zur Bildung der mindestens vier XOR-Verknüpfungen verwendeten Zufallszahlen handelt.

4. Verfahren nach einem der Ansprüche 1 bis 3, **dadurch gekennzeichnet, dass** ein Bezugsschlüssel einmalig für den Bezug einer größeren Zahl kryptographischer Schlüssel durch die Endgeräteeinrichtung (1) verwendet wird und dass weitere quantensichere Schlüssel durch die Endgeräteeinrichtung (1) von dem QKD-Verbund bezogen werden, indem diese in analoger Weise wiederum in größerer Anzahl unter Verschlüsselung mit einem neuen Bezugsschlüssel von einem Netzwerkknoten (2₁, 2₂) des QKD-Verbundes an die Endgeräteeinrichtung (1) übertragen werden.

5. Verfahren nach einem der Ansprüche 1 bis 4 **dadurch gekennzeichnet, dass** die quantensicheren Schlüssel von der sie beziehenden Endgeräteeinrichtung (1) zur Verschlüsselung und Entschlüsselung zwischen ihr und einer Servereinrichtung unter symmetrischer Verschlüsselung ausgetauschter Daten verwendet werden.

6. Verfahren nach Anspruch 5, **dadurch gekennzeichnet, dass** die quantensicheren Schlüssel von der Endgeräteeinrichtung (1) für den verschlüsselten Datenaustausch mit einer als Bestandteil eines der Netzwerkknoten (2₁, 2₂) des QKD-Verbundes ausgebildeten Servereinrichtung verwendet werden.

7. Verfahren nach einem der Ansprüche 1 bis 4 **dadurch gekennzeichnet, dass** die quantensicheren Schlüssel für einen Datenaustausch zwischen einer ersten Endgeräteeinrichtung (1) und einer anderen, zweiten Endgeräteeinrichtung zur Verschlüsselung und Entschlüsselung der unter symmetrischer Verschlüsselung übertragenen Daten verwendet werden, wobei die erste Endgeräteeinrichtung (1), welche zuvor bereits quantensichere Schlüssel von dem QKD-Verbund bezogen hat, unter Übermittlung einer telekommunikativen Adresse der zweiten Endgeräteeinrichtung bei einem der Netzwerkknoten (2₁, 2₂) des QKD-Verbundes eine Übermittlung derselben quantensicheren Schlüssel an die zweite Endgeräteeinrichtung entsprechend dem Verfahren initiiert.

8. Verfahren nach Anspruch 7, wobei die mittels der quantensicheren Schlüssel symmetrisch verschlüsselten Daten zwischen den Endgeräteeinrichtungen über ein zwischen ihnen ad hoc aufgebautes Netzwerk ausgetauscht werden.

9. Endgeräteeinrichtung mit mindestens einer Verarbeitungseinrichtung, nämlich telekommunikative Endgeräteeinrichtung (1) zur Nutzung quantensicherer kryptographischer Schlüssel gemäß dem Verfahren nach einem der Ansprüche 1 bis 8, wobei die Endgeräteeinrichtung (1) ausgestattet ist mit
- einer mittels ihrer mindestens einen Verarbeitungseinrichtung (4) ausführbaren Programmanwendung zur Anforderung von quantensicheren Schlüsseln bei einem von zwei in einer Quantum Key Distribution Verbindung stehenden Netzwerkknoten (2₁, 2₂) gebildeten, die Schlüssel durch Erzeugung quantensicherer Zufallszahlen generierenden QKD-Verbund sowie zur programmtechnischen Verwaltung bei dem QKD-Verbund bezogener quantensicherer Schlüssel und zur Steuerung des Einsatzes dieser Schlüssel,
- Mitteln (5₁, 5₂, 5ₙ), welche dazu ausgebildet sind, unter Verwendung dazu in Speichermitteln der Endgeräteeinrichtung (1) gehaltener Telekommunikationsadressen, über zueinander vollständig disjunkte Übertragungswege zwischen der Endgeräteeinrichtung (1) und jedem der beiden Netzwerkknoten (2₁, 2₂) des QKD-Verbundes mindestens eine VPN-Verbindung zur Datenübertragung aufzubauen,
- einem HSM (6), nämlich einem Hardware-Sicherheitsmodul zur manipulationssicheren Ablage der bei dem Netzwerkknoten (2₁, 2₂) des QKD-Verbundes bezogenen quantensicheren Schlüssel und diesen Schlüsseln jeweils zugeordneter Identifikatoren.

## Claims

1. Method for using quantum-safe cryptographic keys with telecommunication terminal devices (1), which method enables quantum-safe keys to be used by a respective terminal device (1) designed for this purpose, without said terminal device itself having quantum engineering means for generating said keys, wherein the terminal device (1) obtains the quantum-safe keys by requesting them from a QKD group that continuously generates quantum-safe random numbers and is formed by two network nodes (2₁, 2₂) interconnected in a quantum key distribution connection, by a procedure in which, in the event of a request made by the terminal device (1) for quantum-safe keys, from the network nodes (2₁, 2₂) of the QKD group, on at least two mutually disjoint paths, a plurality of mutually different XOR logic combinations formed by bitwise logic combination from random numbers generated by the QKD group are transmitted via VPN connections to the terminal device (1), and the terminal device (1) designed for this purpose extracts a quantum-safe reference key, which is also present at the network nodes (2₁, 2₂) of the QKD group, from said XOR logic combinations, which reference key is used for symmetric encryption in a subsequent transmission process of data transmitted from one of the network nodes (2₁, 2₂) of the QKD group to the terminal device (1), said data comprising a larger number of random numbers which are generated by the QKD group and from which the terminal device (1) receiving them extracts a plurality of cryptographic keys likewise present in both network nodes (2₁, 2₂) of the QKD group and stores them in a tamper-proof manner in a storage unit of the terminal device (1) for later use.

2. Method according to Claim 1, **characterized in that**
a.) in the case of a request made by the terminal device (1) for quantum-safe keys, in the two network nodes (2₁, 2₂) of the QKD group, at least four mutually different XOR logic combinations are formed overall by bitwise logic combination from random numbers generated by the QKD group, wherein one of said random numbers constitutes a key data container, and
b.) a portion of the XOR logic combinations formed in accordance with a.) are transmitted from one of the network nodes (2₁, 2₂) of the QKD group via a first transmission path, and the rest of these XOR logic combinations are transmitted from the other network node (2₁, 2₂) of the QKD group via a second transmission path, which is totally disjoint with respect to the first transmission path, to the terminal device (1) designed for this purpose, wherein together with each XOR logic combination an identical hash value formed in each case from the same random number is transmitted to the terminal device (1), and
c.) all XOR logic combinations arriving at the terminal device (1) together with an identical hash value are bitwise XORed with one another, wherein the XOR logic combinations generated in accordance with a.) and transmitted to the terminal devices (1) in accordance with b.) are formed such that the result of the bitwise XOR logic combination - effected in the terminal device (1) - of all the XOR logic combinations transmitted in each case together with the identical hash value is the quantum-safe random number serving as a key data container, and
d.) in the terminal device (1), from the quantum-safe random number serving as a key data container, a bit sequence serving as a reference key and a bit sequence serving as an identifier for this reference key are extracted, by application of a specification which is also applied for this purpose in the network nodes (2₁, 2₂) or is complementary to a specification applied in the network nodes (2₁, 2₂) during the generation of the key data container, with the reference key and its identifier being combined, and
e.) the identifier associated with the reference key formed in accordance with d.) is transmitted to one of the network nodes (2₁, 2₂) of the QKD group by the terminal device (1) for obtaining a plurality of cryptographic keys, and
f.) from that network node (2₁, 2₂) of the QKD group which receives the identifier associated with the reference key, a larger number of the quantum-safe random numbers generated by the QKD group are transmitted to the requesting terminal device (1) in a manner protected by encryption with the reference key, and
g.) from the data with the random numbers transmitted with encryption with the reference key, in the terminal device (1) that receives them, a corresponding number of cryptographic keys to be used later by the terminal device (1) and, for each of these keys, an identifier associated with it are extracted and stored in a tamper-proof storage unit of the terminal device (1) designed for this purpose, wherein these keys and the identifiers respectively associated with them are extracted from the received random numbers in accordance with a specification which is also applied for this purpose in the network nodes (2₁, 2₂) of the QKD group or which is complementary to a specification applied in the network nodes (2₁, 2₂) during the generation of a respective bit sequence comprising a key and the identifier thereof.

3. Method according to Claim 2, **characterized in that** the random number used for forming the hash value is one of the random numbers also used for forming the at least four XOR logic combinations.

4. Method according to any of Claims 1 to 3, **characterized in that** a reference key is used by the terminal device (1) once for obtaining a larger number of cryptographic keys, and **in that** further quantum-safe keys are obtained from the QKD group by the terminal device (1) by a procedure in which in an analogous manner again a larger number of these keys are transmitted to the terminal device (1) from a network node (2₁, 2₂) of the QKD group with encryption with a new reference key.

5. Method according to any of Claims 1 to 4, **characterized in that** the quantum-safe keys are used by the terminal device (1) that obtains them for the purpose of encryption and decryption of data exchanged between said terminal device and a server device with symmetric encryption.

6. Method according to Claim 5, **characterized in that** the quantum-safe keys are used by the terminal device (1) for the encrypted data exchange with a server device designed as part of one of the network nodes (2₁, 2₂) of the QKD group.

7. Method according to any of Claims 1 to 4, **characterized in that** the quantum-safe keys are used for a data exchange between a first terminal device (1) and another, second terminal device for encryption and decryption of the data transmitted with symmetric encryption, wherein the first terminal device (1), which has already previously obtained quantum-safe keys from the QKD group, with communication of a telecommunication address of the second terminal device, at one of the network nodes (2₁, 2₂) of the QKD group, initiates a communication of the same quantum-safe keys to the second terminal device according to the method.

8. Method according to Claim 7, wherein the data symmetrically encrypted by means of the quantum-safe keys are exchanged between the terminal devices via a network set up ad hoc between them.

9. Terminal device comprising at least one processing device, specifically telecommunication terminal device (1) for using quantum-safe cryptographic keys in accordance with the method according to any of Claims 1 to 8, wherein the terminal device (1) is equipped with
- a program application executable by means of the at least one processing device (4) of said terminal device for requesting quantum-safe keys from a QKD group that is formed by two network nodes (2₁, 2₂) interconnected in a quantum key distribution connection and generates the keys by generating quantum-safe random numbers, and for program-related management of quantum-safe keys obtained from the QKD group, and for controlling the use of these keys,
- means (5₁, 5₂, 5ₙ) that are designed, using telecommunication addresses kept in storage means of the terminal device (1) for this purpose, to set up at least one VPN connection for data transmission via mutually totally disjoint transmission paths between the terminal device (1) and each of the two network nodes (2₁, 2₂) of the QKD group,
- an HSM (6), specifically a hardware security module, for the tamper-proof storage of the quantum-safe keys obtained from the network node (2₁, 2₂) of the QKD group and identifiers respectively assigned to these keys.

## Revendications

1. Procédé d'utilisation de clés cryptographiques à sécurité quantique avec des terminaux de télécommunications (1), lequel procédé permet à un terminal respectif (1) conçu pour cela d'utiliser des clés à sécurité quantique sans lui-même disposer de moyens de technologie quantique pour les générer, le terminal (1) recevant les clés à sécurité quantique en demandant à un composite QKD qui génère en continu des nombres aléatoires de sécurité quantique et qui est formé par deux noeuds de réseau (2₁, 2₂) dans une distribution de clés quantiques (QKD) en ce que, lorsque le terminal (1) demande des clés à sécurité quantique depuis les noeuds de réseau (2₁, 2₂) du composite QKD sur au moins deux chemins disjoints l'un de l'autre, plusieurs opérations XOR formées à partir de nombres aléatoires générés par le composite QKD par combinaison par bits sont transmises au terminal (1) par le biais de liens VPN et en ce que le terminal (1) conçu pour cela extrait de ces opérations XOR une clé de référence à sécurité quantique qui est également présente aux noeuds de réseau (2₁, 2₂) du composite QKD et qui est utilisée pour le cryptage symétrique de données qui sont transmises dans un processus de transmission ultérieur de l'un des noeuds de réseau (2₁, 2₂) du composite QKD au terminal (1) et qui comprennent un plus grand nombre de nombres aléatoires qui sont générés par le composite QKD et desquels le terminal (1), qui les reçoit, extrait plusieurs clés cryptographiques qui sont également présentes dans les deux noeuds de réseau (2₁, 2₂) du composite QKD, et les stocke de manière inviolable dans une mémoire du terminal (1) en vue d'une utilisation ultérieure.

2. Procédé selon la revendication 1, **caractérisé en ce que**
a.) dans le cas où le dispositif terminal (1) demande des clés à sécurité quantique dans les deux noeuds de réseau (2₁, 2₂) du composite QKD, au moins quatre opérations XOR différentes l'une de l'autre sont formées par combinaison par bits à partir de nombres aléatoires générés par le composite QKD, l'un de ces nombres aléatoires représentant un conteneur de données de clés, et
b.) une partie des opérations XOR formées selon a.) et le reste de ces opérations XOR sont transmises au terminal (1), conçu pour cela, respectivement depuis l'un des noeuds de réseau (2₁, 2₂) du composite QKD par le biais d'un premier chemin de transmission et depuis l'autre noeud de réseau (2₁, 2₂) du composite QKD par le biais d'un deuxième chemin de transmission totalement disjoint du premier chemin de transmission, une valeur de hachage identique formée à partir du même nombre aléatoire étant transmise au terminal (1) avec chaque opération XOR, et
c.) toutes les opérations XOR arrivant au terminal (1) conjointement avec une valeur de hachage identique sont combinées entre elles par XOR par bits, les opérations XOR générées selon a.) et transmises au terminal (1) selon b.) étant formées de manière à ce que le résultat de l'opération XOR par bits, effectuée dans le terminal (1), de toutes les opérations XOR transmises avec la valeur de hachage identique soit le nombre aléatoire à sécurité quantique servant de conteneur de données de clés, et
d.) dans le terminal (1), une séquence de bits servant de clé de référence et une séquence de bits servant d'identifiant pour cette clé de référence sont extraites du nombre aléatoire à sécurité quantique servant de conteneur de données de clés par application d'une règle qui est également appliquée pour cela dans les noeuds de réseau (2₁, 2₂) ou qui est complémentaire d'une règle appliquée dans les noeuds de réseau (2₁, 2₂), lors de la génération du conteneur de données de clés, par combinaison de la clé de référence et de son identifiant, et
e.) l'identifiant associé à la clé de référence formé selon d.) est transmis par le terminal (1) à l'un des noeuds de réseau (2₁, 2₂) du composite QKD afin d'obtenir une pluralité de clés cryptographiques et
f.) le noeud de réseau (2₁, 2₂) du composite QKD recevant l'identifiant associé à la clé de référence transmet au terminal demandeur (1) un plus grand nombre de nombres aléatoires à sécurité quantique générés par le composite QKD et sécurisés par cryptage avec la clé de référence, et
g.) un nombre correspondant de clés cryptographiques que le terminal (1) doit utiliser ultérieurement et, pour chacune de ces clés, un identifiant qui lui est associé sont extraits des données avec les nombres aléatoires transmis par cryptage avec la clé de référence dans le terminal récepteur (1) et sont stockés dans une mémoire inviolable du terminal (1) conçu pour cela, ces clés et les identifiants qui leur sont associés étant extraits des nombres aléatoires reçus selon une règle qui est également appliquée pour cela dans les noeuds de réseau (2₁, 2₂) du composite QKD ou qui est complémentaire d'une règle appliquée dans les noeuds de réseau (2₁, 2₂) pour générer une séquence de bits respective comprenant une clé et son identifiant.

3. Procédé selon la revendication 2, **caractérisé en ce que** le nombre aléatoire utilisé pour former la valeur de hachage est l'un des nombres aléatoires également utilisés pour former les au moins quatre opérations XOR.

4. Procédé selon l'une des revendications 1 à 3, **caractérisé en ce qu'**une clé de référence est utilisée une fois par le terminal (1) pour obtenir un plus grand nombre de clés cryptographiques et **en ce que** d'autres clés à sécurité quantique sont obtenues du composite QKD par le terminal (1) **en ce qu'**elles sont transmises de manière analogue en plus grand nombre avec cryptage à l'aide d'une nouvelle clé de référence depuis un noeud de réseau (2₁, 2₂) du composite QKD au dispositif terminal (1).

5. Procédé selon l'une des revendications 1 à 4, **caractérisé en ce que** les clés à sécurité quantique sont utilisées par le terminal (1) qui les obtient pour le cryptage et le décryptage de données échangées entre lui et un serveur par cryptage symétrique.

6. Procédé selon la revendication 5, **caractérisé en ce que** les clés à sécurité quantique sont utilisées par le terminal (1) pour échanger des données de manière cryptée avec un serveur conçu comme faisant partie d'un des noeuds du réseau (2₁, 2₂) du composite QKD.

7. Procédé selon l'une des revendications 1 à 4, **caractérisé en ce que** les clés à sécurité quantique destinées à l'échange de données entre un premier terminal (1) et un deuxième autre terminal sont utilisées pour crypter et décrypter les données transmises par cryptage symétrique, le premier terminal (1), qui a préalablement déjà obtenu du composite QKD des clés à sécurité quantique, lance une transmission de la même clé à sécurité quantique au deuxième terminal conformément au procédé en transmettant une adresse de télécommunications du deuxième terminal à l'un des noeuds de réseau (2₁, 2₂) du composite QKD.

8. Procédé selon la revendication 7, les données cryptées symétriquement au moyen de la clé à sécurité quantique étant échangées entre les terminaux par un réseau établi ad hoc entre eux.

9. Terminal comprenant au moins un dispositif de traitement, à savoir un terminal de télécommunication (1) destiné à utiliser des clés cryptographiques à sécurité quantique conformément au procédé selon l'une des revendications 1 à 8, le terminal (1) comprenant
- une application de programme qui peut être exécutée au moyen de son au moins un dispositif de traitement (4) et qui est destinée à demander des clés à sécurité quantique à un composite QKD formé par deux noeuds de réseau (2₁, 2₂) en liaison de distribution de clé quantique (QKD) et générant les clés en générant des nombres aléatoires à sécurité quantique et à gérer informatiquement des clés à sécurité quantique obtenues auprès du composite QKD et commander l'utilisation de ces clés,
- des moyens (5₁, 5₂, 5ₙ) qui sont conçus pour établir au moins une liaison VPN en vue de la transmission de données à l'aide d'adresses de télécommunication conservées pour cela dans des moyens de mémorisation du terminal (1) par le biais de chemins de transmission totalement disjoints les uns des autres entre le terminal (1) et chacun des deux noeuds de réseau (2₁, 2₂) du composite QKD,
- un HSM (6), à savoir un module de sécurité matériel destiné à stocker de manière inviolable des clés à sécurité quantique obtenues du noeud de réseau (2₁, 2₂) du composite QKD et des identifiants respectivement associés à ces clés.
